# DEMANDE DE BREVET EUROPEEN

(11) **EP 4 817 783 A1**
(43) Date de publication de la demande: **07.10.2026**
(21) Numéro de dépôt: 26170561.0
(22) Date de dépôt: 02.04.2026
(51) Int. Cl.: B23K 26/38, B23K 26/064, B23K 26/073, B23K 26/082

(54) **SYSTÈME D'USINAGE LASER D'UN COMPOSANT ET PROCÉDÉ D'USINAGE LASER**

(30) Priorité: 04.04.2025 EP 25315121
(71) Demandeur: ALPhANOV, 33400 Talence (FR)
(72) Inventeur: BABREL, Benjamin, 33400 Talence (FR); CHASSAGNE, Bruno, 33400 Talence (FR); DI LUNA, Pierre, 74140 Veigy-Foncenex (FR); OLIVEIRA, Alexandre, 74800 Amancy (FR); SIKORA, Aurélien, 33400 Talence (FR)
(74) Mandataire: Moinas & Savoye SARL

(57) **Abrégé**

Système (1) d'usinage laser d'un composant, notamment système (1) de découpe laser d'un composant, le système (1) comprenant :
- une source (L) d'émission d'un faisceau laser émettant des impulsions,
- un premier sous-système (LDO) d'ajustement de polarisation du faisceau laser, notamment une lame demi-onde (LDO),
- au moins un premier et un deuxième déflecteurs, notamment un premier et un deuxième déflecteurs acousto-optiques (AOD) ou un premier et un deuxième déflecteurs électro-optiques (EOD), ayant leurs axes non parallèles, notamment avec leurs axes perpendiculaires,
- un deuxième sous-système (LQO) d'ajustement de polarisation du faisceau sortant des déflecteurs, notamment une ou deux lames quart-d'onde (LQO),
- un sous-système de pilotage des déflecteurs, notamment un générateur de radiofréquence pilotable (GRP),
- un sous-système de synchronisation (DG) de la source d'émission d'un faisceau laser avec le sous-système de pilotage GRP, notamment un générateur de retard ajustable,
- un premier sous-système (F) de focalisation comprenant une première lentille (FT) et positionné après le deuxième sous-système d'ajustement de polarisation du faisceau sortant des déflecteurs,
- un sous-système de contrôle simultané de la divergence et de la déflection du faisceau laser à la sortie des déflecteurs comprenant (i) un deuxième sous-système (RF) de focalisation, notamment un premier télescope (RF), et (ii) un module (SPF) de propagation, le sous-système de contrôle simultané de la divergence et de la déflection étant positionné entre la sortie des déflecteurs et le premier sous-système de focalisation (FT), et
- un sous-système de stabilisation (MS) du faisceau positionné en aval de la source laser et/ou en amont d'un premier déflecteur (AOD),
le système étant configuré pour produire un faisceau laser en précession.

## Description

L'invention concerne un système d'usinage laser d'un composant, notamment en dehors du domaine de l'horlogerie. L'invention concerne encore un procédé d'usinage laser.

L'usinage par laser est utilisé dans la microtechnique pour la production de composants. En particulier, des lasers femtosecondes permettent d'usiner avec précision et sans endommagement thermique des composants de petite taille à très grande vitesse. Cependant, des approches traditionnelles de focalisation et de guidage des faisceaux laser rendent difficile la réalisation de composants avec des flancs droits le long d'une ligne de coupe. La forme conique du faisceau laser au point de focalisation, le profil non-uniforme d'intensité de la lumière du faisceau laser et la non-linéarité de la profondeur d'ablation en fonction de l'intensité de la lumière tendent à incliner les flancs de quelques degrés.

Pour remédier à cela, une approche reconnue consiste à manipuler la pièce à usiner et/ou une tête d'usinage laser à l'aide d'un système mécanique à cinq axes. Cette technique permet d'incliner la pièce et/ou la tête laser pour compenser la conicité au point de focalisation du côté de la pièce épargnée.

Une autre méthode répandue consiste en l'usinage laser par précession, c'est-à-dire avec un faisceau laser incliné et mis en rotation autour d'un axe par des moyens opto-mécaniques. La focalisation de ce faisceau tournant crée un point focal particulier. Le faisceau laser est légèrement incliné par rapport au plan d'usinage dans le sens opposé afin de compenser la conicité et son point focal décrit une trajectoire circulaire. Ce cercle forme la base d'un cône dont le sommet est situé au-dessus du plan d'usinage. En conséquence, la longueur du chemin d'usinage augmente, tout comme le volume de matière enlevée.

Dans les deux cas précédemment décrits, la vitesse d'usinage se trouve considérablement réduite. Dans la première méthode, cette réduction de vitesse est due à la vitesse limitée de déplacement des tables ou des têtes d'usinage. Dans la deuxième méthode, un temps supplémentaire est nécessaire pour que le faisceau complète le parcours de la circonférence du cercle. De surcroît, la stabilité d'un système opto-mécanique contenant des éléments optiques en rotation à grande vitesse, pouvant atteindre 30'000 tours/minute ou 500 Hz, est sujette à une dégradation rapide et s'accompagne souvent de vibrations nuisibles.

Dans les cas d'usinage laser femtosecondes classiques, les lasers femtosecondes permettent d'éliminer la matière par ablation tout en maintenant une charge thermique minimale. Pour ce faire, l'énergie délivrée par impulsion est maintenue juste au-dessus de seuil d'ablation. Le faisceau est focalisé sur la pièce à usiner pour créer un point focal rond. Cela implique un chevauchement entre les impulsions successives afin de garantir une élimination uniforme de la matière. Compte tenu de la faible profondeur d'ablation, plusieurs passages le long du contour de découpe sont nécessaires.

Le recouvrement entre les impulsions successives est typiquement de 50%-75%. La vitesse d'avancement du point focal avec ce recouvrement est$vmax = flase \times dfocal \times \left(1-arec\right) ,$où
- flaser est la fréquence des impulsions laser,
- dfocal est le diamètre du point focal,
- arec est le degré de recouvrement entre les impulsions consécutives. Typiquement, arec=0.75, dfocal=10 µm, flaser=1-10 MHz, ce qui donne une valeur vmax comprise entre 2.5 m/s et 25 m/s. Cette dernière correspond à la vitesse maximale des systèmes galvanométriques.

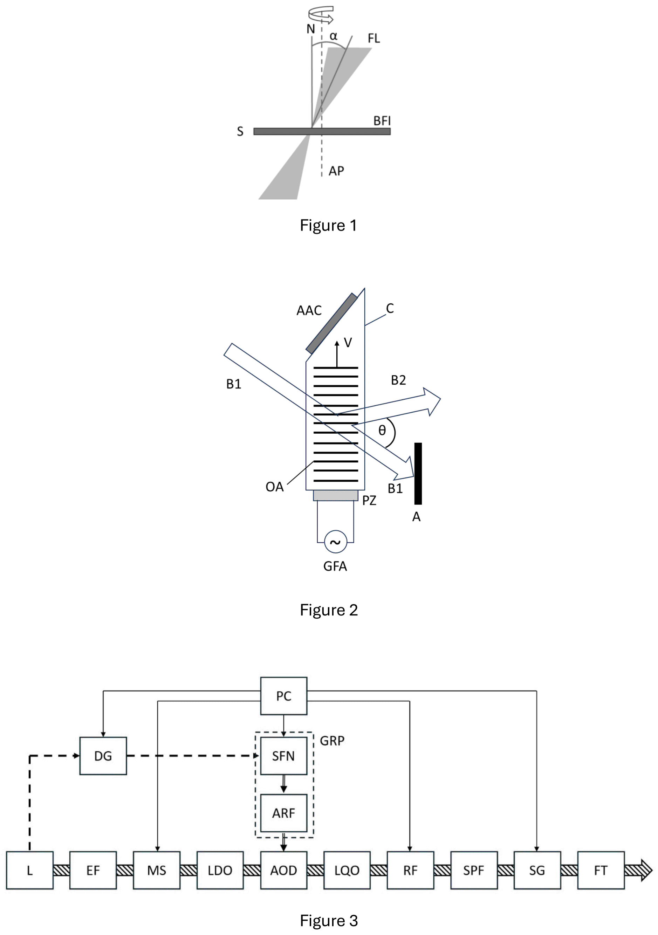

Dans les cas d'usinage laser avec un faisceau en précession, comme représenté sur la figure 1, le faisceau est incliné d'un angle α par rapport à la normale N d'une pièce S à usiner. Afin d'avoir les deux flancs à conicité souhaitée indépendamment de la direction d'usinage, le faisceau incliné est mis en rotation autour de l'axe de précession AP. Un plan BFI (Best Focus Individual) est défini comme le plan de focalisation instantané du faisceau laser. La trace du laser dans ce plan BFI a une forme de cercle. Le faisceau lui-même décrit un cône dans l'espace autour de l'axe AP, dont le sommet doit se trouver au-dessus du plan BFI pour obtenir des flancs à conicité souhaitée.

Le principe de recouvrement des impulsions successives se traduit pour l'usinage à précession par le recouvrement entre deux cercles de précession successifs. La fréquence de précession fprec définit la vitesse maximale d'usinage selon la formule :
$vmax = fprec \times dfocal \times \left(1-arec\right) .$vmax=fprec×dfocal×(1-arec).

Avec fprec=500 Hz (30000 tours/min) typique de systèmes optiques rotatifs de l'art antérieur,
arec=0.75,
dfocal=10 µm,
on obtient vmax=0.00125 m/s = 1.25 mm/s. Cette vitesse est largement au-dessous de la vitesse maximale d'un système galvanométrique estimée ci-dessus.

Lorsque le diamètre de l'ouverture, du côté de l'entrée du faisceau laser dans la pièce à usiner, est supérieur à celui du côté de la sortie, on parle de conicité positive. La conicité est considérée comme nulle lorsque les deux diamètres sont identiques, conférant ainsi aux flancs d'usinage une forme droite : la forme géométrique de l'usinage est alors un petit cylindre en mode statique de perçage. En revanche, la conicité devient négative si le diamètre de l'ouverture côté entrée est inférieur à celui de la sortie du faisceau.

On connaît du document WO2016/024069A1 un système afocal rotatif pour l'usinage laser à précession. Le faisceau laser est décalé parallèlement à son axe initial par un arrangement de deux lentilles hors d'axe, mises en rotation. Ce décalage est transformé par une lentille de focalisation à un angle d'inclinaison qui peut compenser la conicité des flancs d'un trou ou d'un tracé de découpe.

On connaît du document EP3700705A1 un procédé de balayage du faisceau laser jusqu'à 5 ou 6 axes (5D ou 6D) avec une interpolation de parcours entre les points de repère. Les 5 ou 6 axes comprennent :
- 3 axes de coordonnées de position (x,y,z) du point focal,
- les angles α,β de l'inclinaison du faisceau laser par rapport à la trajectoire, et
- l'angle de la polarisation linéaire du faisceau laser.

Deux sous-systèmes de pilotage en 4D (x, y, α, β) du faisceau laser, basés sur 4 miroirs galvanométriques uni-axiaux ou sur 2 miroirs galvanométriques biaxiaux, sont mentionnés à titre d'exemples. Le contrôle en z est assuré par une lentille de focalisation ou par le support de matériau à usiner.

On connaît du document EP3195041A1 un système transformant un faisceau laser à l'aide d'un miroir incliné mis en rotation autour de son axe de symétrie. Pour compenser la déviation angulaire du faisceau, un retro-réflecteur le renvoie sur le miroir qui, par une deuxième réflexion, remet le faisceau sur un chemin parallèle et décalé relativement au faisceau initial. De ce fait, le faisceau laser décrit un cercle centré autour d'un axe. Ce mouvement circulaire est ensuite converti par une lentille de focalisation à un mouvement de précession qui peut compenser la conicité des flancs d'un trou ou d'un tracé de découpe.

On connaît du document WO2012035031A1 un système opto-mécanique rotatif de précession pour réaliser l'usinage laser avec une conicité de flancs réglable. L'élément réglant la déviation circulaire du faisceau laser est une lame aux surfaces parallèles inclinée.

On connaît du document US20160250714A1 un système de traitement laser comprenant :
1) un premier système de positionnement pour imposer un premier mouvement relatif d'un axe de faisceau laser le long d'une trajectoire de faisceau par rapport à une pièce à usiner ;
2) un processeur pour déterminer un deuxième mouvement relatif de l'axe du faisceau laser à une amplitude réduite en regard du premier mouvement (dithering) ;
3) un deuxième système de positionnement pour imposer le deuxième mouvement relatif ; et
4) une source laser pour émettre les impulsions de faisceau laser.

Le premier système est un déflecteur galvanométrique et le deuxième système est un déflecteur acousto-optique (AOD). La demande vise à protéger l'usinage à grande vitesse de pistes conductrices à une section variable et à une géométrie variable pour des encapsulations de puces de semiconducteurs (semiconductor packaging).

Des lentilles de relais sont proposées pour diriger le faisceau après le deuxième système (AOD) vers le premier système galvanométrique. Ces dernières peuvent introduire des aberrations et empêcher la bonne focalisation du faisceau laser. Par conséquent, le temps d'usinage peut être augmenté et/ou la précision d'usinage peut être réduite.

Dans les documents EP3770697A1, EP4004654A1, CH716430A2, EP3770698A1, EP4004653A1, CH716431A2, on décrit des procédés de fabrication d'une pierre horlogère, sans et avec un trou respectivement, comprenant une étape d'ablation laser à impulsion ultra-courte avec une durée de moins de 100 ps. Le balayage du faisceau laser se fait par un système de précession à 3 axes pour annuler et/ou contrôler la conicité des flancs d'usinage.

Le but de l'invention est de fournir un système d'usinage laser permettant de surmonter les contraintes actuelles associées à l'utilisation d'optiques mobiles, notamment en termes de vitesse d'usinage laser par précession, limitée par la vitesse de précession et sa trajectoire circulaire, ainsi que par la maîtrise de la conicité et de la rugosité. Les trajectoires en formes fermées, telles qu'un cercle, une ellipse, un polygone, ou en formes ouvertes, comme une spirale, sont réalisables en grande vitesse. L'invention vise également à pallier les éventuelles limitations de la puissance transmise à la pièce à usiner induites par les optiques intégrant plusieurs éléments réfractifs. L'invention rend aussi possible l'usinage laser flexible, ce qui permet de changer presque instantanément entre un mode d'usinage à précession et un mode d'usinage conventionnel sans précession.

Un système d'usinage laser selon l'invention est défini par la revendication 1.

Différents modes de réalisation du système d'usinage laser selon l'invention sont définis par les revendications 2 à 12.

Un procédé d'usinage laser selon l'invention est défini par la revendication 13.

Des modes d'exécution du procédé selon l'invention sont définis par les revendications 14 et 15.
Les figures représentent, à titre d'exemple, un mode de réalisation d'un système d'usinage laser selon l'invention.
La figure 1 est une vue schématique explicative du principe d'usinage avec laser en précession.
La figure 2 est une vue schématique explicative du principe de fonctionnement d'un déflecteur acousto-optique.
La figure 3 est un schéma bloc d'un mode de réalisation d'un système d'usinage laser selon l'invention.
La figure 4 est une vue schématique d'un mode de réalisation du système d'usinage laser selon l'invention.
La figure 5 est un schéma représentant la forme enveloppe d'un faisceau laser en précession en l'absence de système de contrôle de divergence.
La figure 6 est un schéma représentant la forme enveloppe d'un faisceau laser en précession avec mise en œuvre d'un système de contrôle de divergence.
La figure 7 est un tableau récapitulant des paramètres permettant un mode d'exécution d'usinage selon l'invention.

Un mode de réalisation d'un système 1 est décrit ci-après en référence aux figures 3 à 7. Le système d'usinage laser peut notamment être un système de découpe laser ou de gravure laser.

Le système 1 comprend :
- une source L d'émission d'un faisceau laser émettant des impulsions,
- un premier sous-système LDO d'ajustement de polarisation du faisceau laser, notamment une lame demi-onde LDO,
- au moins un premier et un deuxième déflecteurs, notamment un premier et un deuxième déflecteurs acousto-optiques AOD ou un premier et un deuxième déflecteurs électro-optiques, ayant leurs axes non parallèles, notamment avec leurs axes perpendiculaires,
- un deuxième sous-système LQO d'ajustement de polarisation du faisceau sortant des déflecteurs, notamment une ou deux lames quart-d'onde LQO pour convertir une polarisation linéaire en une polarisation circulaire du faisceau laser,
- un sous-système de pilotage des déflecteurs, notamment un générateur de radiofréquence pilotable GRP pouvant être réalisé soit par un synthétiseur de fréquence numérique soit par un oscillateur contrôlé en tension, contrôlant l'énergie et l'émission d'une impulsion laser avec un pilotage des déflecteurs, notamment un pilotage de l'excitation d'ondes acoustiques des déflecteurs acousto-optiques ou un pilotage de l'indice de réfraction des déflecteurs électro-optiques, afin d'ajuster l'intensité du faisceau laser en sortie des déflecteurs,
- un sous-système de génération de retard ajustable DG, permettant de synchroniser le GRP avec l'horloge du laser de manière à piloter le changement de déflection des AOD entre deux impulsions laser successives ou un sous-système de synchronisation DG de la source d'émission d'un faisceau laser avec le sous-système de pilotage GRP,
- un premier sous-système F de focalisation comprenant une première lentille FT et positionné après le deuxième sous-système LQO d'ajustement de polarisation du faisceau sortant des déflecteurs,
- un sous-système de contrôle simultané de la divergence et de la déflection linéaire du faisceau laser à la sortie des déflecteurs, et
- un sous-système de stabilisation MS du faisceau positionné en aval de la source laser et/ou en amont d'un premier déflecteur.

De préférence, le système est configuré de sorte à produire une précession du faisceau laser.

De plus, le sous-système de contrôle simultané de la divergence et de la déflection linéaire du faisceau laser comprend ;
- un deuxième sous-système RF de focalisation, comme un premier télescope RF, et
- un module SPF de propagation de longueur nécessaire pour obtenir :
   (a) une distance première lentille FT-point focal du faisceau (distance entre le plan BFI et un point de référence O en amont du plan BFI) plus longue que la distance première lentille FT-sommet du cône de précession (distance entre le plan BFG et le point de référence O en amont du plan BFG), et
   (b) un diamètre d'anneau de précession prédéfini.

De plus encore, le sous-système de contrôle simultané de la divergence et de la déflection linéaire est positionné entre la sortie des déflecteurs et le premier sous-système de focalisation FT.

Dans le mode de réalisation du système d'usinage laser illustré et décrit plus en détail les déflecteurs sont des déflecteurs acousto-optique (ci-après déflecteurs AOD ou AOD).

Dans ce mode de réalisation, pour produire un faisceau en précession, on utilise des déflecteurs acousto-optiques, décrits ci-après en référence à la figure 2. L'excitation des ondes acoustiques OA dans un cristal C par un élément piézo-électrique PZ, piloté par un générateur électrique radiofréquence G_{RF}, crée un réseau équiphase, dont la vitesse de propagation est celle du son dans le matériau. Par effet acousto-optique, l'indice de réfraction du matériau est modulé périodiquement par des zones de compression et de dilatation produites par les ondes acoustiques. Le faisceau laser incident B1 est diffracté par ce réseau en mouvement. Le faisceau diffracté B2 présente un angle de diffraction θ relativement à la direction du faisceau incident B1. L'angle θ est approximé par la relation :$θ = \left(λ\times {f}_{RF}\right) / V ,$ avec :
λ est la longueur d'onde du faisceau laser,
f_{RF} est la fréquence des ondes acoustiques, et
V est la vitesse de ces ondes.

L'angle de diffraction peut donc être modifié, en changeant la fréquence acoustique. L'amplitude angulaire maximale n'est cependant pas élevée, typiquement de l'ordre de 1°.

De préférence, le faisceau non-diffracté B1 n'est pas utilisé et est bloqué par un absorbeur A. Typiquement, jusqu'à 90% de l'énergie du faisceau incident B1 peut être convertie dans le faisceau B2.

Avantageusement, chaque 'AOD comprend aussi un absorbeur des ondes acoustiques AAC.

Les AODs sont avantageusement combinés en paires avec leurs directions de déflection orthogonales l'une à l'autre. Cela permet de diriger le faisceau dans deux dimensions, et, en particulier, en précession pour former un faisceau en précession.Lorsque les déflecteurs sont du type AOD, on change l'amplitude et la fréquence des ondes acoustiques en fonction de l'angle de diffraction et de l'intensité du faisceau laser que l'on souhaite obtenir.

Lorsque les déflecteurs sont du type EOD, on change l'amplitude de la tension de pilotage des déflecteurs en fonction de l'angle de réfraction que l'on souhaite obtenir.

Pour réaliser un usinage laser aussi rapide que possible avec des impulsions femtosecondes, le laser étant piloté en mouvement de précession, il est nécessaire d'assurer un recouvrement adéquat entre les cercles de précession. Ces derniers sont générés par l'action des déflecteurs acousto-optiques, tandis que le système d'usinage laser comprend encore un système galvanométrique SG (tête de scanner) assurant les déplacements d'avance d'usinage. Ainsi, la grande surface de travail atteignable par l'usinage est assurée par le système galvanométrique SG. Ce principe nécessite de maximiser la vitesse de précession afin d'exploiter pleinement la vitesse de balayage maximale du système galvanométrique.

L'utilisation de déflecteurs acousto-optiques (AODs) permet d'augmenter en général la vitesse d'adressage dans le plan de travail, par conséquent la fréquence de précession, notamment en raison de leur temps de réaction de l'ordre de 1 µs (durée correspondant à la propagation du son à travers le diamètre du faisceau), contrairement à la milliseconde atteignable par des systèmes rotatifs mécaniques. Cependant, afin d'améliorer l'exploitation des AODs, des mesures spécifiques sont avantageusement utilisées :
a) on réduit les effets non linéaires dus aux impulsions laser de haute intensité,
b) on compense la variabilité de l'intensité lumineuse diffractée en fonction de l'angle de diffraction et de la polarisation,
c) en raison d'un angle de diffraction limité à environ 1°, on met en œuvre un système capable de transformer la déflection angulaire du faisceau laser en un déplacement linéaire dans le plan perpendiculaire au faisceau de préférence d'environ 10 mm,
d) on stabilise le faisceau incident face au faible angle de déflection et à l'ouverture restreinte de l'AOD, qui est généralement de l'ordre de 5 mm,
e) on met en œuvre un système de contrôle PC du point focal du faisceau en précession pour obtenir une conicité souhaitée lors de l'usinage laser.

Dans une variante, l'adressage le long du contour, qui peut être fermé ou ouvert, est décrit par le système d'usinage de manière aléatoire ou continue afin d'optimiser la rugosité des flancs et la charge thermique.

L'utilisation d'un AOD est limitée par l'endommagement laser et la cadence laser. Les cristaux de l'AOD sont constitués de quartz, un diélectrique ayant une fluence seuil d'endommagement élevée. Pour une impulsion unique à 515 nm et une durée d'impulsion de 500 fs, le seuil d'endommagement est estimé à environ 2.5 J.cm⁻² dans la silice. Cependant, à cause des effets d'incubation, ce seuil chute à environ 0.6 J.cm⁻² après 100 000 impulsions. L'AOD ayant une ouverture de 7 mm maximum, l'énergie maximale par impulsion est estimée à 230 mJ. Par conséquent, en supposant un seuil d'endommagement à peu près stable au-delà de 100 000 impulsions à environ 0.6 J.cm⁻², l'AOD peut être utilisé sans risque avec les lasers industriels actuels avec une puissance de 300 W et une fréquence d'impulsions de l'ordre de 0.1 MHz à 1 MHz.

La cadence laser maximale utilisable est limitée par la vitesse du son dans le cristal de l'AOD et la taille du faisceau. Pour un diamètre de faisceau de 7 mm, la fréquence maximale est estimée à 814 kHz selon le temps nécessaire pour les ondes acoustiques de traverser cette distance à la vitesse d'environ 5'700 m.s⁻¹.

Le sous-système de pilotage comprend un générateur de délai DG qui synchronise l'excitation des ondes acoustiques dans les AODs avec l'arrivée d'une impulsion laser afin de créer un réseau diffractif, optimisant ainsi l'intensité de la lumière diffractée. Ce sous-système ajuste également l'efficacité de la diffraction en fonction de l'intensité acoustique. Cette régulation permet d'uniformiser l'intensité du faisceau laser sur sa trajectoire annulaire dans le plan perpendiculaire à l'axe optique du système, notamment lorsqu'il adopte un trajet circulaire, assurant une ablation homogène de la matière tout au long de l'usinage. Dans une variante de réalisation, le pilotage peut être basé sur un tableau de correspondance (Look Up Table) qui associe des valeurs de l'angle de diffraction à des fréquences et des intensités acoustiques spécifiques. Dans une autre variante, l'intensité des impulsions laser en sortie de source peut être ajustée en fonction de l'angle de diffraction pour assurer une intensité uniforme du faisceau le long de la trajectoire en aval des AODs.

Afin de compenser les déviations, notamment celles dues aux fluctuations thermiques du faisceau en sortie de la source d'émission laser L, le sous-système de stabilisation MS du faisceau laser est avantageusement intégré en amont des AODs. Ainsi, le sous-système de stabilisation MS du faisceau peut être positionné entre l'agrandisseur EF et l'entrée du premier déflecteur acousto-optique AOD. Ce sous-système permet également et avantageusement de raccourcir le temps d'attente avant l'usinage en raison du préchauffage du laser après l'allumage.

Après le passage par les AODs, le faisceau laser, décrivant une trajectoire annulaire, est focalisé par un premier sous-système F de focalisation, notamment par une lentille F-theta télécentrique, ce qui offre l'avantage de conserver la taille du point focal sur l'étendue du champ de travail et de minimiser les aberrations. Étant donné que la divergence du faisceau est inférieure à l'angle de déflection des AODs en mode de trajectoire annulaire, le faisceau est focalisé avant le sommet du cône de précession.

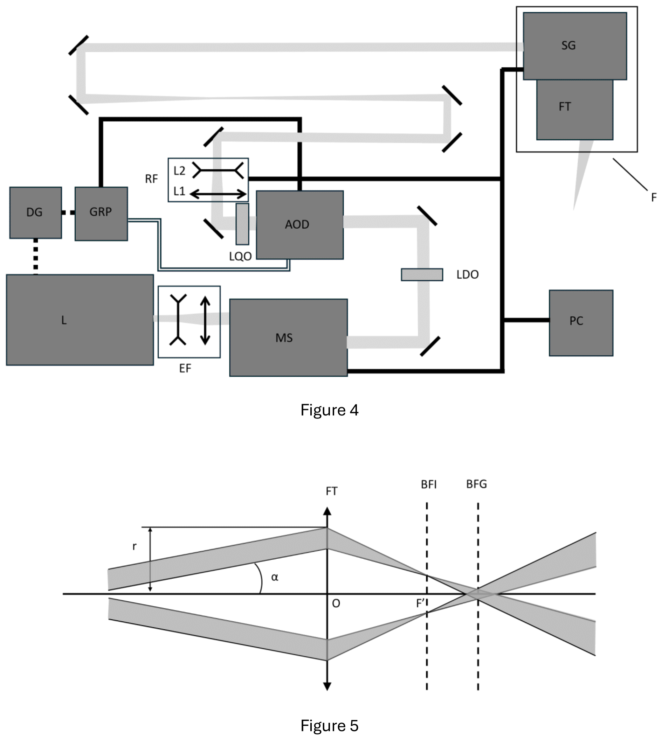

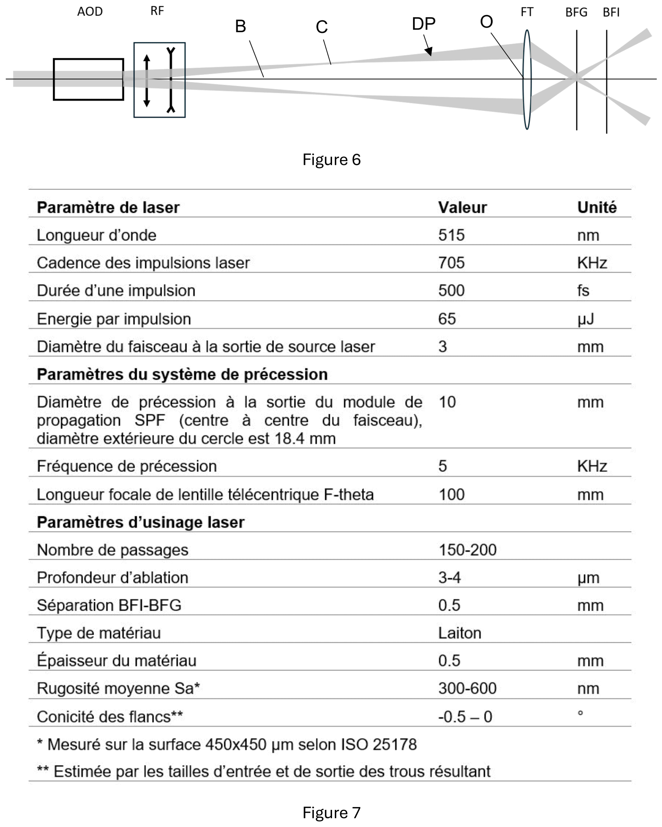

Comme illustré sur les figures 5 et 6, le plan BFG (pour « Best Focus Global ») est le plan perpendiculaire à l'axe optique où se forme la section de plus petite dimension du croisement virtuel du faisceau laser en précession, qui est très proche du sommet du cône formé par le faisceau laser en précession. Il est indispensable d'effectuer l'usinage de la matière après le sommet du cône de précession (en aval du plan BFG) pour obtenir des flancs à conicité nulle ou négative. Le plan BFI (pour « Best Focus Individual ») est le plan perpendiculaire à l'axe optique où se trouve la focalisation du faisceau laser. Si le faisceau est correctement collimaté, le plan BFI coïncide avec le plan focal de la lentille.

La focalisation précoce du faisceau laser, illustrée sur la figure 5, empêche un usinage optimal en précession. La largeur de la tranchée de découpe s'élargit significativement après le plan BFG (par rapport au faisceau sans précession), ce qui nécessite des impulsions plus puissantes et compromet la précision. Cela augmente le risque de surchauffe du matériau à usiner et de dégradation de la qualité des flancs.

L'écart Δ entre les plans BFI et BFG est donné par l'équation suivante :$Δ = BFG - BFI = f / \left(r/\left(f\times tan α\right)-1\right) , α$ où
f est la distance focale du sous-système F de focalisation,
r est le rayon du cercle du faisceau à l'entrée du sous-système F de focalisation,
α est l'angle entre le faisceau laser et l'axe de précession (l'axe optique).

Pour des valeurs typiques de :
- distance focale valant 100 mm,
- angle α valant entre 0.1° et 1°, et
- rayon r valant 10 mm,
on obtient une valeur de Δ valant entre 1 et 20 mm. Ceci est défavorable, car le plan BFG se trouve toujours en aval du plan BFI.

Pour remédier à cette situation, le système d'usinage laser comprend avantageusement un deuxième sous-système RF de focalisation, notamment un premier télescope, légèrement focalisant, introduit en aval des AODs. En ajustant la distance entre les lentilles L1 et L2 du deuxième sous-système RF de focalisation, il est possible de modifier la divergence du faisceau en le focalisant légèrement et en exploitant sa partie divergente après le point de focalisation. Afin d'éviter le claquage optique au niveau de ce foyer intermédiaire, une focalisation douce est essentielle. Celle-ci se caractérise par une longue distance de focalisation effective. Avantageusement, cette longue distance est également utilisée pour augmenter le rayon de balayage du faisceau par les AODs. Le positionnement du sous-système RF à la sortie des AODs place le foyer de déflection près du centre de la lentille positive, ce qui laisse inchangé ou modifie légèrement l'angle de déflection nécessaire à la précession. La situation est inverse en ce qui concerne la divergence du faisceau, permettant ainsi un ajustement précis de la distance entre les plans BFI et BFG pour former un point de focalisation optimal, en vue d'un usinage en précession avec une conicité contrôlée.

Sur les figures 5 et 6, les angles de divergence des faisceaux sont exagérés pour faciliter la compréhension.

Le premier sous-système de focalisation FT comprenant une lentille F-theta télécentrique dans une tête de scanner offre deux avantages principaux pour réaliser des flancs droits en usinage laser à précession. Le premier avantage est que l'angle d'incidence moyen pour chaque faisceau laser reste perpendiculaire à la surface du composant usiné aussi bien au centre qu'aux bords du champ usinable. Ceci permet d'éviter la perte d'homogénéité d'usinage due à la loi en cos(θ)⁴ (définissant une atténuation de l'énergie du faisceau en fonction de l'angle θ d'incidence du faisceau). Un deuxième avantage, découlant du premier, est une forme de focalisation du faisceau constamment circulaire également dans la profondeur d'usinage. En cas de décalage vertical lors de l'usinage, cela garantit la stabilité de l'angle d'incidence et donc la constance de l'inclinaison des flancs, ainsi que la qualité de leurs surfaces.

À l'opposé, une tête de scanner munie d'une lentille F-theta standard lors d'un usinage laser permet de couvrir une surface de travail plus étendue par rapport à une lentille F-theta télécentrique. Cependant, l'angle d'incidence des rayons varie : il est perpendiculaire au plan de travail au centre, mais s'incline progressivement vers les bords. En conséquence, une lentille F-theta standard ne permet pas de maintenir l'incidence normale du faisceau laser en cas de décalages latéral et vertical, et sur toute la surface de travail. De surcroît, la forme du point focal est déformée en ellipse en dehors du centre du plan de travail, rendant difficile, voire impossible, la réalisation de flancs à inclinaison constante via la précession du faisceau laser avec une lentille non télécentrique. En effet, l'angle d'incidence devient dépendant de la position du point d'usinage sur le plan de travail et de la profondeur d'usinage.

Les figures 3 et 4 illustrent schématiquement le système d'usinage laser à précession avec conicité contrôlée selon un mode de réalisation. Ce système comprend une source laser L qui, via le générateur de délai DG, synchronise l'excitation des déflecteurs acousto-optiques AOD. Le faisceau sortant de la source laser est agrandi par un télescope EF avant d'entrer dans le sous-système de stabilisation MS. Après le passage à travers le sous-système de stabilisation MS, la polarisation du faisceau est ajustée par le premier sous-système LDO d'ajustement de polarisation du faisceau laser afin de maximiser l'efficacité de diffraction des AODs. La polarisation linéaire du faisceau après les AODs est convertie en polarisation circulaire par le deuxième sous-système LQO d'ajustement de polarisation du faisceau sortant des déflecteurs acousto-optiques. Ensuite, la divergence du faisceau est modifiée par le sous-système du contrôle simultané de la divergence et de la déflection linéaire du faisceau laser, incluant le premier télescope. Le module de propagation du faisceau SPF assure la distance de parcours nécessaire pour ajuster sa divergence, et également pour convertir la déflection angulaire en une déflection linéaire, avant l'entrée du faisceau dans le premier sous-système F de focalisation. Ce premier sous-système F de focalisation comprend des miroirs galvanométriques SG et la première lentille de focalisation F-theta télécentrique FT.

La source laser L peut être associée à un doubleur de fréquence. La source laser L peut ainsi fournir des impulsions d'une durée de 10 fs à 10'000 fs, à une cadence de 100 kHz à 1 MHz, avec une énergie par impulsion de 1 µJ à 200 mJ, une longueur d'onde de 300 nm à 2'000 nm et un faisceau d'un diamètre de 1 à 10 mm.

Le télescope EF augmente de préférence le diamètre du faisceau de 3 mm à 5 mm, permettant ainsi une meilleure utilisation de l'ouverture totale des AODs de 7 mm.

Le sous-système de contrôle simultané de la divergence et de la déflection linéaire du faisceau laser comprend le télescope RF. Le télescope comprend par exemple deux lentilles, L1 et L2, ayant des longueurs focales de 150 mm et -100 mm, respectivement. Elles peuvent être positionnées à une distance d'environ 40 mm l'une de l'autre sur un axe motorisé, lequel permet de modifier cette distance via le sous-système de contrôle PC.

La divergence obtenue après le passage dans le télescope RF est de 0.1 à 5 milliradians, typiquement de 1 à 2 milliradians. Le diamètre du faisceau sans précession est de 3 mm à 18 mm à l'entrée du système galvanométrique SG. Le diamètre du cercle de précession peut être fixé de 0.1 à 20 mm. Ainsi, le diamètre externe de ce cercle est d'environ de 3 à 38 mm à l'entrée dans le premier sous-système F de focalisation, avec des valeurs typiques de 10 à 20 mm. La distance totale de propagation du faisceau entre la sortie du télescope RF et l'entrée du système galvanométrique SG est d'environ de 3 à 10 m, typiquement de 5 à 7 m.

Le premier sous-système F de focalisation est représenté sur la figure 4. Le premier sous-système F de focalisation peut comprendre :
- une tête de scanner SG comprenant deux miroirs galvanométriques, notamment capables de recevoir un faisceau jusqu'à 40 mm de diamètre, typiquement de 20 à 30 mm, et
- une lentille F-thêta télécentrique FT, notamment avec une longueur focale de 100 mm.

La vitesse de balayage du faisceau peut varier entre 8 et 14 m/s. La distance entre le plan BFG et le plan de BFI peut être comprise entre 10 et 5000 µm, typiquement entre 100 et 500 µm, en fonction des valeurs de divergence et de déflection par AOD du faisceau.

Un exemple de paramètres d'usinage possibles est donné dans le tableau de la figure 7.

Différents paramètres contrôlent la conicité d'usinage et la rugosité des flancs selon le procédé de l'invention ou en utilisant un système d'usinage selon l'invention :
- le nombre de passes. Avec plus de passes, la conicité devient plus négative jusqu'à une certaine limite qui dépend du seuil d'ablation. Le seuil d'ablation par une impulsion laser, pour une matière donnée, dépend de la longueur d'onde, de la durée d'impulsion, de son énergie et de l'intensité énergétique (J/cm⁻²) sur la surface de la matière. Cette dernière est déterminée par les moyens de focalisation, typiquement une lentille.
- le diamètre d'anneau qui est décrit par le faisceau laser défléchi par les AODs. Ce diamètre définit l'angle du cône de la précession ou l'angle d'attaque. Plus le diamètre est grand, plus la conicité est négative à longueur focale donnée de la lentille de focalisation.
- le nombre d'impulsions laser sur le pourtour de l'anneau que décrit le faisceau laser défléchi par les AODs. Ce nombre se trouve entre 1 et 10'000, typiquement entre 1 et 1000.
- la longueur focale de la lentille F-theta et le diamètre de cône de précession, qui est donné par la déflection des AODS, définissent l'angle d'attaque de la matière à usiner.
- la rugosité des flancs dépend du nombre de passes et du type de parcours du faisceau. Elle se réduit avec l'augmentation du nombre de passes, ainsi qu'avec l'uniformisation de l'usinage en créant un parcours du faisceau avec un recouvrement du point focal le plus uniforme possible et sans schémas répétitifs. Pour ce faire, la précession (rotation du faisceau laser par les AODs) est alternée entre le sens horaire et le sens antihoraire. L'adressage non-séquentiel, par exemple aléatoire, des points sur la circonférence de l'anneau de précession réduit également la rugosité.

La conicité peut être contrôlée grâce à deux modes distincts d'usinage.

Dans le premier mode, l'angle de déflection du faisceau laser par les AODs est constant pour former un anneau d'un diamètre final constant. Dans ce premier mode, la conicité ne varie pas le long du parcours d'usinage du composant, et le pilotage du faisceau laser par la tête de scanner n'est pas synchronisé avec l'angle de déflection par les AODs.

Dans le deuxième mode, à chaque position sur le contour d'usinage du composant, une valeur de la conicité est attribuée. La position de la tête de scanner, qui décrit le contour du composant est utilisée pour calculer la déflection nécessaire par les AODs afin de créer un cône de précession adapté. De ce fait, la tête de scanner est synchronisée avec les AODs. Cette synchronisation est effectuée par un sous-système de contrôle PC.

Dans le cadre de l'invention, les essais ont démontré que, avec une longueur focale de la lentille F-theta de 100 mm, la plage de conicité de flancs était de ±5°. En changeant la longueur focale à 50 mm, cette plage a été élargie à ±10°.

Les matériaux aptes à l'usinage laser par précession selon la présente invention incluent :
- les métaux,
- les alliages métalliques,
- les céramiques,
- les verres,
- les polymères, et
- des combinaisons de ces derniers, notamment en forme de composites.

Ces matériaux peuvent être cristallins, notamment polycristallins, ou non-cristallins, notamment amorphes, naturels ou synthétiques. Des exemples des matériaux polycristallins et cristallins sont des alliages métalliques, des semiconducteurs, des céramiques, des cermets, du saphir et du rubis. Des exemples des matériaux amorphes sont des verres minéraux et des alliages métalliques amorphes.

La longueur d'onde de la source laser est choisie en fonction de l'absorption du matériau à usiner. Typiquement, les métaux s'usinent bien avec toutes les longueurs d'onde pratiques entre 2 µm et 300 nm. Les longueurs d'onde de 600 à 300 nm sont préférées pour des matières transparentes ou translucides, ainsi que pour les métaux en raison de la plus haute précision d'usinage.

Quel que soit le mode de réalisation ou la variante, les AODs peuvent être réalisés en quartz cristallin SiO₂. En variante, d'autres matériaux acousto-optiques peuvent être utilisés pour les AODs, par exemple :
- l'oxyde de tellure TeO₂,
- le niobate de potassium KNbO₃,
- le niobate de lithium LiNbO₃,
- le tantalate de lithium LiTaO₃, ou
- le molybdate de plomb PbMoO₄.

Quel que soit le mode de réalisation ou la variante, en alternative aux AODs, il est possible d'utiliser des déflecteurs électro-optiques (EOD Electo-Optical Deflector). Dans ces déflecteurs :
- les effets électro-optiques, notamment l'effet Pockels ou l'effet linéaire électro-optique (proportionnel à l'intensité de champ électrique), et
- l'effet Kerr ou l'effet électro-optique quadratique,
peuvent également être utilisés pour la construction de déflecteurs électro-optiques. Un avantage de tels déflecteurs EOD est l'absence de faisceau non-dévié, ce qui enlève la nécessité d'avoir un absorbeur refroidi pour absorber le faisceau non-dévié. Ceci permet de réaliser des déflecteurs plus compacts et sans refroidissement à eau.

Il existe deux configurations principales pour réaliser un déflecteur électro-optique. Une première configuration utilise la réfraction sur les faces d'un prisme. Une deuxième configuration utilise la réfraction due à un gradient de l'indice de réfraction perpendiculairement à la direction de propagation d'un faisceau laser. Dans les deux configurations, le champ électrique est appliqué perpendiculairement à la direction de propagation de la lumière.

De manière similaire aux déflecteurs acousto-optiques, les déflecteurs électro-optiques présentent des caractéristiques de déflection similaires, avec une fréquence de déflection de l'ordre de 1 à 100 MHz et une amplitude de l'ordre de 0,1° à 1°.

Des matériaux aptes pour réaliser les déflecteurs électro-optiques à effet Pockels sont par exemple :
- le niobate de lithium LiNbO₃,
- le tantalate de lithium LiTaO₃,
- le dihydrogénophosphate de potassium (KDP) KH₂PO₄ et sa variante deutérée (DKDP) KD₂PO₄,
- le triphosphate de potassium synthétisé par voie hydrothermale (HGKTP) K₃PO₄,
- le borate de baryum bêta (BBO) β-BaB₂O₄,
- le phosphate de titanyl de potassium KTiOPO₄.

Quel que soit le mode de réalisation ou la variante, en alternative au système galvanométrique de la tête de scanner SG (miroirs galvanométriques), on peut utiliser par une combinaison d'une table permettant des translations selon deux directions non parallèles (XY) et d'une lentille de focalisation, notamment une lentille télécentrique intégrée dans le sous-système de focalisation F. Dans ce mode de réalisation, le parcours d'usinage est effectué par translations de la table XY à la place du balayage du faisceau laser par orientation des miroirs galvanométriques. Ce mode de réalisation permet de réaliser une tête d'usinage laser avec une meilleure évacuation des déchets d'usinage, ce qui résulte en une meilleure qualité de découpe, grâce à un système intégré de buses à gaz comprimé.

Quel que soit le mode de réalisation ou la variante, le premier sous-système de focalisation peut être une tête de scanner qui comprend deux miroirs galvanométriques SG et une lentille F-theta télécentrique FT. Quel que soit le mode de réalisation ou la variante, le premier sous-système de focalisation peut comprendre des buses de gaz comprimé, notamment d'air comprimé, pour évacuer les produits de découpe du point focal de la lentille.

Quel que soit le mode de réalisation ou la variante, le système d'usinage peut comprendre une table à translation selon deux axes, ou selon trois axes, ou selon 4 axes, ou selon 5 axes ou plus, afin de déplacer le composant usiné relativement au faisceau laser. Une telle table peut être utilisée en remplacement ou en complément d'une tête de scanner (à miroirs galvanométriques ou à table à deux axes de translations).

Quel que soit le mode de réalisation ou la variante, un sous-système de contrôle PC permet de synchroniser les déflecteurs et la tête de scanner afin d'obtenir une conicité contrôlée des flancs selon la position sur le contour d'usinage du composant en ajustant le diamètre de précession du faisceau laser.

Quel que soit le mode de réalisation ou la variante, un module de stabilisation du faisceau laser peut comprendre typiquement des miroirs biaxiaux motorisés avec des moteurs pas-à-pas ou des servo-moteurs ou des actionneurs piézoélectriques. Ces actionneurs peuvent être contrôlés par un système électronique en boucle fermé ou ouverte (closed-loop ou open loop) afin de garder la position angulaire et linéaire du faisceau stable, en prenant comme référence la position du faisceau sur deux capteurs de position comme une photodiode en quadrant ou une caméra d'imagerie. Ces capteurs peuvent être typiquement positionnés derrière deux miroirs partiellement transparents disposés sur l'axe de propagation du faisceau.

Quel que soit le mode de réalisation ou la variante, dans le cas du pilotage d'AOD via un synthétiseur de fréquence programmable, une séquence de fréquences et d'amplitudes correspondant respectivement à des déflections de faisceau et des intensités laser sont avantageusement stockées en mémoire dans une LUT (look-up table). Un front d'horloge en provenance du système laser est envoyé vers une entrée du synthétiseur de fréquence pour déclencher le passage d'un ensemble de valeurs de la LUT vers l'ensemble de valeurs suivant. Afin que le régime transitoire déclenché par ce changement de fréquence et d'amplitude ne perturbe pas le faisceau laser, celui-ci est synchronisé entre deux impulsions laser successives. Cette synchronisation est assurée par le bon réglage d'un générateur de délai réglable DG. Les valeurs de la LUT et les valeurs de délai sont transmises au générateur par l'ordinateur de contrôle PC. Le générateur de délai peut être utilisé en mode maître (master) ou en mode esclave (slave) par rapport à la tête scanner.

L'invention porte également sur un procédé d'usinage laser dont un mode d'exécution est décrit ci-après. Un tel procédé d'usinage peut être mis en œuvre par un système d'usinage laser tel que décrit précédemment. Le procédé d'usinage laser permet d'usiner un composant, notamment un composant horloger ou un composant non-horloger.

Le procédé d'usinage comprend les étapes suivantes :
- une première étape E1 d'ajustement de paramètres du laser en fonction du matériau du composant à usiner et d'une rugosité de flancs d'usinage à obtenir, notamment la fréquence d'impulsions, l'énergie et la durée des impulsions laser, le schéma du parcours, pour obtenir une profondeur d'ablation de 1 à 20 µm, préférablement de 1 à 10 µm, encore plus préférablement de 2 à 5 µm, en un seul passage,
- une deuxième étape E2 d'ajustement du système de contrôle de divergence du faisceau laser à la sortie de déflecteurs acousto-optiques AOD, notamment la distance entre des lentilles du télescope RF, pour obtenir:
   (i) une distance entre le point focal du faisceau laser (ou plan BFI) et un point de référence O, tel que la lentille FT, disposé en amont du point focal du faisceau laser
      plus longue que
   (ii) une distance entre le sommet du cône de précession (ou plan BFG) et le point de référence O, tel que la lentille FT, disposé en amont du sommet du cône de précession,
   en fonction du matériau du composant à usiner et d'une inclinaison de flancs d'usinage à obtenir,
- une troisième étape E3 d'ajustement d'une vitesse d'avancement du faisceau laser sur un plan d'usinage en fonction d'une vitesse de précession du faisceau laser obtenue par l'action des déflecteurs acousto-optiques AOD,
- une quatrième étape E4 d'usinage laser du composant avec les paramètres déterminés dans les première, deuxième et troisième étapes.

Les solutions décrites plus haut permettent de réduire le temps d'usinage ou de découpe de composants aux flancs droits, en dehors de l'horlogerie, d'un facteur dix comparativement aux solutions existantes. Selon l'invention, le système d'usinage ne présente pas d'élément mobile, notamment en rotation, pour créer la précession du faisceau laser. La précession est en effet réalisée grâce à des déflecteurs, notamment AOD ou EOD. Le balayage dans les directions transverses au faisceau laser est réalisée grâce à des miroirs galvanométriques (tête de scanner).

## Revendications

1. Système (1) d'usinage laser d'un composant, notamment système (1) de découpe laser d'un composant, le système (1) comprenant :
- une source (L) d'émission d'un faisceau laser émettant des impulsions,
- un premier sous-système (LDO) d'ajustement de polarisation du faisceau laser, notamment une lame demi-onde (LDO),
- au moins un premier et un deuxième déflecteurs, notamment un premier et un deuxième déflecteurs acousto-optiques (AOD) ou un premier et un deuxième déflecteurs électro-optiques (EOD), ayant leurs axes non parallèles, notamment avec leurs axes perpendiculaires,
- un deuxième sous-système (LQO) d'ajustement de polarisation du faisceau sortant des déflecteurs, notamment une ou deux lames quart-d'onde (LQO),
- un sous-système (GRP) de pilotage des déflecteurs, notamment un générateur de radiofréquence pilotable (GRP),
- un sous-système de synchronisation (DG) de la source (L) d'émission d'un faisceau laser avec le sous-système de pilotage GRP, notamment un générateur de retard ajustable,
- un premier sous-système (F) de focalisation comprenant une première lentille (FT) et positionné après le deuxième sous-système d'ajustement de polarisation du faisceau sortant des déflecteurs,
- un sous-système de contrôle simultané de la divergence et de la déflection du faisceau laser à la sortie des déflecteurs comprenant (i) un deuxième sous-système (RF) de focalisation, notamment un premier télescope (RF), et (ii) un module (SPF) de propagation, le sous-système de contrôle simultané de la divergence et de la déflection étant positionné entre la sortie des déflecteurs et le premier sous-système de focalisation (FT), et
- un sous-système de stabilisation (MS) du faisceau positionné en aval de la source laser et/ou en amont d'un premier déflecteur (AOD), le système étant configuré pour produire un faisceau laser en précession.

2. Système (1) selon la revendication 1, **caractérisé en ce que** le système (1) comprend un agrandisseur (EF) d'un diamètre du faisceau laser, notamment un deuxième télescope (EF).

3. Système (1) selon la revendication 2, **caractérisé en ce que** le sous-système de stabilisation (MS) du faisceau est positionné entre l'agrandisseur (EF) et l'entrée du premier déflecteur (AOD).

4. Système (1) selon l'une des revendications précédentes, **caractérisé en ce que** le premier sous-système (F) de focalisation comprend une tête de scanner (SG) incluant deux miroirs galvanométriques.

5. Système (1) selon la revendication 4, **caractérisé en ce que** le système (1) comprend un sous-système de contrôle (PC) agencé de sorte à synchroniser :
- les déflecteurs (AOD), et
- la tête de scanner (SG),
afin d'obtenir une conicité contrôlée de flancs d'usinage selon la position sur un contour d'usinage du composant en ajustant un diamètre de précession du faisceau laser.

6. Système (1) selon l'une des revendications 1 à 5, **caractérisé en ce que** la première lentille (FT) de focalisation est une lentille F-thêta-télécentrique.

7. Système (1) selon l'une des revendications 1 à 3, **caractérisé en ce que** le premier sous-système (F) de focalisation comprend :
- des buses d'éjection de gaz comprimé, notamment d'air comprimé, pour évacuer les produits d'usinage du point focal de la première lentille (FT), et
- une table (T) de déplacement du composant selon deux axes, ou selon trois axes, ou selon quatre axes, ou selon cinq axes ou plus relativement à la première lentille (FT).

8. Système (1) selon l'une des revendications précédentes, **caractérisé en ce que** le deuxième sous-système de focalisation (RF) est configuré pour produire une partie divergente (DP) du faisceau laser au-delà d'un point de focalisation intermédiaire (C).

9. Système (1) selon l'une des revendications précédentes, **caractérisé en ce que** le deuxième sous-système de focalisation (RF) est un premier télescope (RF) comprenant des lentilles ayant des longueurs focales différentes, notamment une première longueur focale d'environ 150 mm et une deuxième longueur focale d'environ -100 mm.

10. Système (1) selon l'une des revendications précédentes, **caractérisé en ce que** les déflecteurs sont configurés pour faire décrire au faisceau laser une forme annulaire, notamment une forme circulaire, dans un plan perpendiculaire à un axe optique (B).

11. Système (1) selon l'une des revendications précédentes, **caractérisé en ce que** le sous-système de pilotage des déflecteurs (GRP) contrôle l'énergie et l'émission d'une impulsion laser avec un pilotage des déflecteurs, notamment un pilotage de l'excitation d'ondes acoustiques des déflecteurs acousto-optiques (AOD) ou un pilotage de l'indice de réfraction des déflecteurs électro-optiques (EOD), afin d'ajuster l'intensité du faisceau laser en sortie des déflecteurs.

12. Système (1) selon l'une des revendications précédentes, **caractérisé en ce que** le sous-système de synchronisation (DG) permet de synchroniser le sous-système de pilotage (GRP), notamment avec une horloge du laser, de manière à piloter le changement de déflection des déflecteurs entre deux impulsions laser successives.

13. Procédé d'usinage laser, notamment procédé de découpe laser, d'un composant non-horloger, comprenant les étapes suivantes :
- une première étape (E1) d'ajustement de paramètres d'un laser en fonction d'un matériau du composant à usiner et d'une rugosité de flancs d'usinage à obtenir, notamment la fréquence d'impulsions, l'énergie et la durée des impulsions laser, pour obtenir une profondeur d'ablation de 1 à 20 µm, préférablement de 1 à 10 µm, encore plus préférablement de 2 à 5 µm, en un seul passage,
- une deuxième étape (E2) d'ajustement du système de contrôle de la divergence du faisceau laser à la sortie de déflecteurs (AOD), notamment la distance entre des lentilles d'un télescope (RF), pour obtenir :
(i) une distance entre le point focal du faisceau laser et un point de référence (O), notamment une première lentille (FT), en amont du point focal du faisceau laser
plus longue que
(ii) une distance entre le sommet d'un cône de précession et le point de référence (O), notamment la première lentille (FT), en amont du sommet du cône de précession,
en fonction du matériau du composant à usiner et d'une inclinaison de flancs d'usinage à obtenir,
- une troisième étape (E3) d'ajustement d'une vitesse d'avancement du faisceau laser sur un plan d'usinage en fonction d'une vitesse de précession du faisceau laser obtenue par l'action des déflecteurs (AOD),
- une quatrième étape (E4) d'usinage laser du composant avec les paramètres déterminés dans les première, deuxième et troisième étapes.

14. Procédé selon la revendication 13, le procédé comprenant l'utilisation d'un système (1) selon l'une des revendications 1 à 12.

15. Procédé selon l'une des revendications 13 et 14, **caractérisé en ce qu'**un contrôle simultané de la divergence et de la déflection du faisceau laser permet des ajustements indépendants de :
- la position du point focal du faisceau laser, et
- la position du sommet du cône de précession.
